Europäisches Patentamt

(19) European Patent Office

Office européen des brevets

(11) Numéro de publication : **0 250 519 B1**

(12) **FASCICULE DE BREVET EUROPEEN**

(45) Date de publication du fascicule du brevet : **22.05.91 Bulletin 91/21**

(51) Int. Cl.⁵ : **A61C 19/10, G01J 3/50**

(21) Numéro de dépôt : **87900167.5**

(22) Date de dépôt : **12.12.86**

(86) Numéro de dépôt international : **PCT/FR86/00433**

(87) Numéro de publication internationale : **WO 87/03470 18.06.87 Gazette 87/13**

(54) **PROCEDE ET DISPOSITIF DE DETERMINATION DE LA COULEUR, EN PARTICULIER D'UNE PROTHESE DENTAIRE.**

(30) Priorité : **13.12.85 FR 8518540**

(43) Date de publication de la demande : **07.01.88 Bulletin 88/01**

(45) Mention de la délivrance du brevet : **22.05.91 Bulletin 91/21**

(84) Etats contractants désignés :
**AT BE CH DE FR GB IT LI LU NL SE**

(56) Documents cités :
**FR-A- 2 231 958**
**FR-A-14 707 66**
**FR-A-21 881 57**
**FR-A-23 594 06**
**FR-A-23 760 87**
**FR-A-25 167 85**

(73) Titulaire : **BERTIN & CIE**
**Zone Industrielle Boîte postale 3**
**F-78373 Plaisir Cédex (FR)**

(72) Inventeur : **LEQUIME, Michel**
**6, rue des Sauries**
**F-13510 Eguilles (FR)**
Inventeur : **MILLET, Jocelyn**
**20, rue des Bougainvilliers**
**F-84120 Perthuis (FR)**

(74) Mandataire : **Ramey, Daniel**
**Cabinet Ores 6 Avenue de Messine**
**F-75008 Paris (FR)**

## Description

Procédé et dispositif de détermination de la couleur, en particulier d'une prothèse dentaire.

L'invention concerne un procédé et un dispositif de détermination de la couleur à donner à un objet, en particulier une prothèse dentaire, à partir de la couleur d'un autre objet, notamment des dents adjacentes dans la bouche d'un patient.

On sait qu'il est essentiel qu'une prothèse dentaire (une couronne, une dent à pivot, un bridge, etc.) ait une couleur aussi proche que possible de celle des dents adjacentes.

Actuellement, la détermination de la couleur d'une prothèse se fait à la vue, en général par un dentiste qui compare des échantillons de couleurs aux dents de son patient. Cette façon de faire donne des résultats qui dépendent nécessairement de la capacité du dentiste à apprécier des différences entre des couleurs très voisines et qui, pour cette seule raison, ne sont pas toujours très satisfaisants.

Il arrive en outre que la couleur ainsi choisie d'une prothèse soit très proche de celle des dents adjacentes lorsqu'elles sont éclairées par une source de lumière équiénergétique, et que cette couleur soit assez éloignée de celle des dents adjacentes lorsqu'elles sont éclairées par une source de lumière à raies telles qu'un tube fluorescent (phénomène de métamérisme).

Par ailleurs on connaît (par exemple par le document FR-A-2 359 406), des colorimètres utilisant des filtres et permettant de déterminer les composantes trichromatiques X, Y, Z de la couleur d'un objet pour un éclairage donné. Toutefois, la connaissance de ces composantes trichromatiques pour un éclairage ne permet pas de déterminer les valeurs de ces composantes pour un autre éclairage. Ainsi, afin d'éviter le métamérisme avec ce colorimètre, il faudrait réaliser des mesures de couleurs pour plusieurs éclairages différents, ce qui est un inconvénient majeur.

On a proposé également, dans le document FR-A-2 516 785, d'utiliser un spectromètre pour déterminer la réflectance spectrale diffuse d'une dent, le procédé consistant à éclairer une très petite plage de cette dent successivement par des rayonnements étagés de 10 nanomètres en 10 nanomètres sur tout le spectre visible, et à mesurer l'intensité de la lumière réfléchie ou diffusée par la dent. Ces mesures sont alternées avec des mesures sur un échantillon, puis sont répétées sur d'autres plages de la dent. Il faut environ 400 mesures successives pour obtenir la réflectance spectrale diffuse de la dent, à partir des mesures effectuées sur cinq plages différentes de la dent, de sorte que ce procédé n'est pas utilisable en pratique.

L'invention a notamment pour but d'éviter les inconvénients précités.

Elle a pour objet un procédé et un dispositif permettant de déterminer les couleurs apparentes d'un objet correspondant à différents types d'éclairage, à partir d'une mesure unique réalisée dans un éclairage quelconque.

Elle a également pour objet un procédé et un dispositif du type précité, permettant de réaliser sans difficultés cette mesure pour des objets aussi difficilement accessibles que les dents d'une personne.

L'invention propose donc un procédé de détermination de la couleur d'un objet, en particulier d'une prothèse dentaire à partir de la couleur d'un objet identique tel qu'une dent adjacente dans la bouche d'un patient, ce procédé consistant à éclairer la dent par une lumière d'un type quelconque et à capter et transmettre la lumière réfléchie par la dent au moyen d'une ou plusieurs fibres optiques, caractérisé en ce qu'il consiste à transmettre la lumière réfléchie par la dent à un spectrocolorimètre et à déterminer à partir d'une mesure unique sur la dent la réflectance spectrale diffuse de cette dent, puis à déterminer par calcul les colorations apparentes de la dent pour des éclairages différents afin de définir la couleur à donner à la prothèse en évitant les problèmes de métamérisme.

A partir de la réflectance spectrale diffuse de la dent éclairée, on peut déterminer par le calcul, après un échantillonnage approprié de cette réflectance spectrale diffuse, les composantes trichromatiques des colorations de cette dent pour la totalité des éclairages possibles et, dans la pratique, pour des sources de lumière normalisées (par exemple une source de lumière d'égale énergie, les illuminants normalisés C.I.E., une source à raies, etc.) qui correspondent à divers types d'éclairage possibles.

L'invention permet donc, à partir d'une seule mesure, de disposer des composantes trichromatiques des couleurs apparentes d'une dent pour différents types d'éclairage, et donc de choisir par comparaison, la couleur de la prothèse dont les composantes trichromatiques se rapprocheront le plus de celles des couleurs apparentes de la dent.

Selon une autre caractéristique de l'invention, on peut effectuer cette mesure de réflectance spectrale diffuse et de détermination des couleurs apparentes pour plusieurs dents du patient et pour plusieurs échantillons-tests de couleurs de prothèse, afin de déterminer l'échantillon dont les couleurs apparentes se rapprochent le plus de celles des dents du patient.

Avantageusement, pour définir la couleur de la prothèse, on peut privilégier la couleur apparente en éclairage naturel.

L'invention prévoit également de visualiser sur un terminal graphique un ensemble représentant les dents adjacentes du patient et la prothèse, avec leurs couleurs apparentes respectives pour différents types d'éclairage. On peut ainsi vérifier visuellement, pour différents types d'éclairage, si la couleur choisie d'une prothèse correspond bien à celles des autres dents du patient.

L'invention propose également un dispositif de détermination de la couleur d'une prothèse dentaire, à partir de la couleur d'au moins une dent adjacente dans la bouche d'un patient, comprenant une source de lumière d'un type quelconque et des fibres optiques pour éclairer la dent, capter la lumière réfléchie par la dent et la transmettre, caractérisé en ce qu'il comprend un spectrocolorimètre dont une voie d'entrée à fibre optique est reliée auxdites fibres optiques de captation et de transmission de la lumière, ce spectrocolorimètre comprenant des moyens de mesure et de détermination de la réflectance spectrale diffuse de la dent, à partir d'une mesure unique de la lumière réfléchie par la dent, et des moyens de calcul associés au spectrocolorimètre pour déterminer les colorations apparentes de la dent correspondant à des éclairages différents et définir sans risque de métamérisme la couleur à donner à la prothèse.

Selon d'autres caractéristiques de l'invention, le dispositif comprend un instrument de prise d'informations in situ, comportant une fibre optique associée à la source de lumière pour l'éclairage de la dent, et une fibre optique de captation et de transmission de la lumière réfléchie par la dent, des moyens optiques de focalisation permettant une mesure locale sur une partie de la dent, et/ou des moyens d'homogénéisation de la lumière incidente ou réfléchie, tels par exemple qu'une microsphère intégrante.

Le spectrocolorimètre utilisé est avantageusement du type comprenant un spectromètre à mosaïque d'éléments photodétecteurs, associé à un microprocesseur et monté sur une carte optoélectronique qui porte également au moins deux voies de mesure à fibres optiques aboutissant à l'entrée du spectromètre et munies d'obturateurs assurant la commutation des voies de mesure, des moyens d'étalonnage des photodétecteurs en longueur d'onde, et des circuits électroniques de lecture des photodétecteurs.

L'une des voies de mesure du spectromètre est associée à la source de lumière, et l'autre est reliée à l'instrument de prise d'informations pour recevoir la lumière réfléchie par la dent éclairée.

Le microprocesseur peut être associé à un terminal graphique, pour la visualisation d'un ensemble de dents comprenant la prothèse et les dents adjacentes, avec leurs couleurs apparentes correspondant à différents types d'éclairage.

Dans la description qui suit, faite à titre d'exemple, on se réfère aux dessins annexés, dans lesquels:

    – la figure 1 représente schématiquement un dispositif selon l'invention ;

    – la figure 2 est une vue schématique, à plus grande échelle, de l'instrument de prise d'informations, représenté en regard d'une dent.

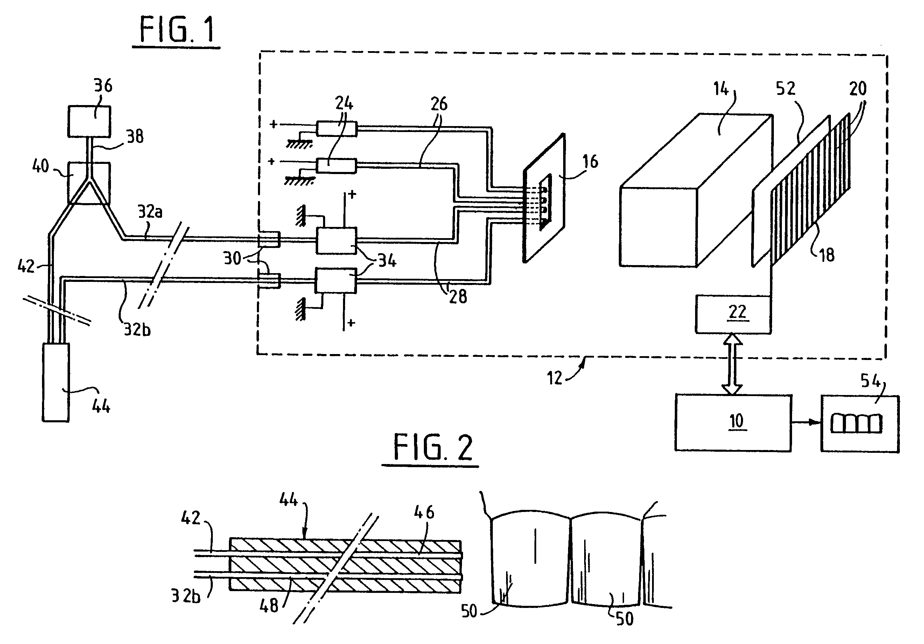

Dans le mode de réalisation représenté en figure 1, le dispositif selon l'invention est constitué essentiellement par l'association d'un spectrocolorimètre du type décrit dans la demande de brevet français No 85 15351 déposée le 16 octobre 1985, d'un instrument de prise d'informations in situ, et d'une source d'éclairage d'un type quelconque.

Le spectrocolorimètre se compose d'un microprocesseur de commande et de calcul 10 et d'une carte optoélectronique 12 dont le contour a été représenté en trait pointillé et sur laquelle sont montés un spectromètre 14 du type à réseau de diffraction, par exemple à montage optique de Littrow, qui comprend une fente d'entrée 16, et une barrette ou mosaïque 18 de photodétecteurs 20, qui sont par exemple des photodiodes au silicium.

Les photodétecteurs 20 sont associés à des circuits électroniques désignés par la référence 22, qui sont montés sur la carte 12 et comprennent des circuits, par exemple du type multiplex, de lecture des charges des détecteurs, un convertisseur analogique-numérique, une horloge programmable de détermination du temps d'intégration des photodétecteurs 20, des mémoires-tampon, ainsi que des circuits de traitement des informations numérisées.

La carte 12 porte également des moyens d'étalonnage en longueur d'onde des photodétecteurs 20, qui sont constitués par deux diodes électroluminescentes 24, alimentées en courant continu sous commande du microprocesseur 10 et reliées par des fibres optiques 26 formant deux voies d'étalonnage à la fente d'entrée 16 du spectromètre. Chaque diode 24 émet, lorsqu'elle est alimentée, une radiation lumineuse de longueur d'onde déterminée, les longueurs d'onde des radiations des deux diodes étant assez distantes l'une de l'autre dans le spectre visible.

Sur la carte 12 sont également prévues deux voies de mesure 28 à fibres optiques, dont une extrémité aboutit à la fente d'entrée 16 du spectromètre et dont l'autre extrémité peut être reliée, par l'intermédiaire d'un connecteur 30 monté sur la carte 12, à une voie de mesure 32a, 32b, respectivement, formée par une fibre optique pouvant avoir une grande longueur si nécessaire.

Chaque voie de mesure 28 sur la carte 12 est équipée d'un obturateur 34 qui est alimenté en courant continu sous commande du microprocesseur 10 et qui permet d'ouvrir et de fermer la voie de mesure correspondante 28.

Une source de lumière 36, qui peut être par exemple une lampe émettant un rayonnement de référence spectrale, est reliée par une fibre optique 38 et un coupleur 40 en Y, d'une part à l'entrée de la voie de mesure 32a du spectromètre et, d'autre part, par une fibre optique 42 à un instrument 44 de prise d'informations, qui est relié également à l'autre voie de mesure 32b du spectromètre.

L'instrument 44 contient deux fibres optiques 46 et 48 qui sont raccordées respectivement aux fibres optiques 42 et 32b ou qui en constituent une extension, et qui débouchent librement à l'extrémité de l'instrument 44. Celui-ci se présente en pratique sous la même forme qu'un instrument de dentiste et peut avoir un diamètre de l'ordre de quelques millimètres, de façon à pouvoir être introduit facilement dans la bouche d'un patient pour être amené en regard d'une dent 50.

Cet instrument 44 peut comporter éventuellement des moyens optiques de focalisation (non représentés) permettant une prise locale d'informations en un point d'une dent. Il peut également comporter des moyens optiques d'homogénéisation de la lumière incidente ou réfléchie, tels par exemple qu'une microsphère intégrante associée à la fibre 46 ou 48 et permettant notamment de s'affranchir des variations d'incidence. On peut par exemple réaliser une prise d'informations avec une géométrie 0/45 ou 45/0 (lumière incidente normale et lumière réfléchie reprise à 45°, ou inversement) ou 0/d ou d/0 (lumière incidente normale et lumière réfléchie reprise par la microsphère, ou inversement).

Par ailleurs, comme déjà décrit dans la demande de brevet français No 85 15351, les extrémités des fibres optiques formant les voies d'étalonnage 26 et les voies de mesure 28 du spectromètre sont superposées les unes aux autres dans la fente d'entrée 16. Les photodétecteurs 20 doivent alors avoir une hauteur suffisante, correspondant à la hauteur des extrémités superposées des fibres optiques. Lorsque le spectromètre 14 est un montage optique de Littrow dont le rapport d'agrandissement est de 1/1, la hauteur des détecteurs 20 doit être au moins égale à la hauteur des extrémités superposées des quatre fibres optiques formant les voies d'étalonnage et de mesure, c'est-à-dire en fait à quatre fois le diamètre d'une fibre optique.

En outre, un filtre 52 à densité dégradée de compensation, appelé correcteur plan focal, est placé sur les photodétecteurs 20, de façon à ce que ces derniers reçoivent des flux énergétiques du même ordre de grandeur et, de préférence, sensiblement égaux. On sait en effet que les fibres optiques ont une transmission spectrale défavorable dans le bleu, de telle sorte que les flux énergétiques des composantes spectrales entrant dans le spectromètre sont beaucoup plus faibles dans le bleu que dans le rouge, cette atténuation étant d'autant plus importante que la longueur des fibres optiques formant les voies de mesure est plus grande. Le correcteur plan focal 52 permet de rétablir une densité sensiblement régulière de flux énergétique sur les photodétecteurs 20. De plus, son utilisation est préférable à celle d'un ensemble de filtres bleus, qui ne laissent passer qu'une fraction du flux énergétique incident.

Le dispositif qui vient d'être décrit fonctionne de la façon suivante :

Les opérations d'étalonnage ou de calibrage des photodétecteurs 20 peuvent être réalisées automatiquement de façon périodique, sur commande du microprocesseur 10 ou à volonté de l'utilisateur. Pour cela, les obturateurs 34 des voies de mesure 28 sont fermés, et des mesures sont réalisées par allumage d'une diode 24, l'autre étant éteinte, puis par allumage de l'autre diode 24, la première étant éteinte. Ces mesures sont répétées systématiquement à des intervalles de temps prédéterminés plus ou moins longs, les résultats des premières mesures étant conservés en mémoire et comparés aux résultats des mesures réalisées ensuite, pour vérifier leur concordance et recalibrer automatiquement l'ensemble de photodétecteurs 20 si nécessaire.

Pour effectuer une mesure spectrométrique, les deux diodes 24 sont éteintes, une voie de mesure 28 est ouverte, l'autre étant fermée. Le flux énergétique reçu par les photodétecteurs 20 est mesuré et comparé à leur seuil de saturation, pour déterminer le temps d'intégration par les photodétecteurs du signal reçu et obtenir un signal aussi important que possible, mais inférieur au seuil de saturation. Le temps d'intégration, qui varie en général entre 1 ms et 1 s environ, est déterminé par une horloge programmable permettant d'asservir automatiquement le temps d'intégration à la valeur du flux énergétique reçu, pour l'obtention d'un signal représentant 90% de la dynamique des photodétecteurs.

Les signaux des détecteurs 20, c'est-à-dire en fait leurs charges, sont lus par des circuits de lecture du type multiplex, ayant une fréquence de lecture constante égale à la fréquence maximale de lecture des détecteurs, c'est-à-dire celle qui correspond à la valeur minimale du temps d'intégration. La lecture des photodétecteurs se traduit par la remise à zéro de l'intégration pour la mesure suivante. Les signaux lus sur les détecteurs sont numérisés par un convertisseur analogique numérique et sont ensuite traités. Le bruit des photodétecteurs est mesuré par fermeture de toutes les voies de mesure, et ce bruit mesuré est automatiquement soustrait du signal de mesure obtenu par ouverture d'une voie de mesure du spectromètre.

Pour déterminer les colorations apparentes d'une dent, on procède de la façon suivante :

L'instrument 44 de prise d'informations est placé dans la bouche du patient, en regard de la zone de la dent dont on veut déterminer la couleur. Cette dent est éclairée par la source de lumière 36, par l'intermédiaire de la fibre optique 42, 46, aboutissant à l'extrémité de l'instrument 44 en regard de la dent 50. La lumière réfléchie par la dent et qui est modifiée par la couleur de celle-ci, est captée par la fibre optique 48 et transmise par la voie de mesure 32b à la fente d'entrée 16 du spectromètre 14.

Tout d'abord, la voie de mesure 32a associée à la lampe 36 est ouverte pour une mesure spectrométrique du rayonnement émis par cette lampe, tandis que la voie de mesure 32b associée à la dent 50 est fermée, puis la voie de mesure 32a est fermée tandis que la voie de mesure 32b est ouverte pour une mesure spectrométrique de la lumière réfléchie par la dent 50, le rapport de ces deux mesures permettant de déterminer la réflectance spectrale diffuse $D(\lambda)$ de la dent.

Les composantes trichromatiques X, Y et Z de la couleur de la dent sont déterminées à l'aide des relations suivantes :

$$X = \int_\lambda D(\lambda)\, S(\lambda)\, \bar{x}(\lambda)\, d\lambda$$

$$Y = \int_\lambda D(\lambda)\, S(\lambda)\, \bar{y}(\lambda)\, d\lambda$$

$$Z = \int_\lambda D(\lambda)\, S(\lambda)\, \bar{z}(\lambda)\, d\lambda$$

où :

$\lambda$ est la longueur d'onde,

$D(\lambda)$ est la réflectance spectrale diffuse,

$S(\lambda)$ est un coefficient spectral dépendant de la source d'éclairage,

$\bar{x}(\lambda)$, $\bar{y}(\lambda)$, $\bar{z}(\lambda)$ sont les composantes spectrales trichromatiques de l'observateur de référence colorimétrique C.I.E.

Les coefficients trichromatiques x, y, z de la couleur de la dent sont donnés par les relations suivantes :

$$x = \frac{X}{X + Y + Z}$$

$$y = \frac{Y}{X + Y + Z}$$

$$z = \frac{Z}{X + Y + Z}$$

Lorsque l'on dispose de la réflectance spectrale diffuse $D(\lambda)$, on l'échantillonne en longueur d'onde par pas de longueur d'onde de 5 ou 10 nm par exemple et l'on calcule les composantes trichromatiques X, Y, Z à l'aide des relations indiquées ci-dessus, pour un coefficient spectral $S(\lambda)$ correspondant. Les courbes $S(\lambda)$ pour des sources lumineuses de référence normalisées sont connues, avec un échantillonnage correspondant à celui de $D(\lambda)$, ainsi que les valeurs échantillonnées de $\bar{x}(\lambda)$, $\bar{y}(\lambda)$, $\bar{z}(\lambda)$.

On peut ainsi, à partir d'une seule mesure de la réflectance spectrale diffuse d'une dent, déterminer les composantes trichromatiques des colorations apparentes de cette dent pour différents types d'éclairage.

Les mêmes opérations peuvent être répétées en plaçant l'extrémité de l'instrument 44 de prise d'informations en regard des échantillons-tests de couleur de prothèse, dont disposent les dentistes et les prothésistes. Par comparaison des résultats, c'est-à-dire des colorations apparentes pour différents types d'éclairage, on peut déterminer l'échantillon-test dont la couleur se rapproche le plus de celle de la dent, pour différents types d'éclairage. En pratique, on aura tendance à privilégier, pour cette comparaison, la coloration en lumière naturelle.

Il est bien entendu possible de répéter également ces opérations de détermination de la réflectance spectrale diffuse et de calcul des composantes trichromatiques pour d'autres zones d'une dent du patient, ou pour d'autres dents adjacentes à la prothèse.

Les résultats de ces mesures et de ces calculs peuvent être visualisés sur un terminal graphique 54 associé au microprocesseur 10, sur lequel on verra apparaitre un ensemble de dents, ayant des formes types correspondant aux dents du patient et à la prothèse, et des couleurs correspondant aux colorations apparentes déterminées pour différents types d'éclairage. Cette visualisation permet de vérifier très rapidement l'accord esthétique entre la couleur d'un échantillon-test et celle des dents du patient.

Le dispositif selon l'invention permet donc de déterminer de façon rapide et fiable la couleur à donner à une prothèse dentaire, en fonction de la couleur des dents adjacentes dans la bouche du patient.

Les prothèses dentaires sont souvent réalisées avec une résine colorée par des pigments dont le dosage varie en fonction de la couleur à obtenir. L'invention, qui permet de déterminer de façon très précise la couleur à donner à la résine, permet également de déterminer le dosage correspondant des pigments et donc d'automatiser ce dosage.

L'invention est également applicable à d'autres domaines techniques, lorsque la couleur à donner à un article doit être déterminée à partir de la couleur d'un autre article.

## Revendications

1. Procédé de détermination de la couleur d'un objet, en particulier d'une prothèse dentaire à partir de la couleur d'un objet identique tel qu'une dent (50) adjacente dans la bouche d'un patient, ce procédé consistant à éclairer la dent (50) par une lumière d'un type quelconque, et capter et transmettre la lumière réfléchie par la dent au moyen d'une ou plusieurs fibres optiques (46, 48), caractérisé en ce qu'il consiste à transmettre la lumière réfléchie par la dent à un spectrocolorimètre (10, 12, 14) et à déterminer à partir d'une mesure unique sur la dent la réflectance spectrale diffuse $D(\lambda)$ de la dent, puis à déterminer par calcul les colorations apparentes de la dent pour des éclairages différents afin de définir la couleur à donner à la prothèse en évitant les problèmes de métamérisme.

2. Procédé selon la revendication 1, caractérisé en ce qu'on réalise un échantillonnage en longueurs d'ondes de la réflectance spectrale diffuse D(λ) de la dent, on détermine le coefficient spectral S(λ) correspondant à un type d'éclairage donné et on calcule les composantes trichromatiques X, Y, Z, de la couleur apparente de la dent pour cet éclairage.

3. Procédé selon la revendication 1 ou 2, caractérisé en ce qu'on effectue des déterminations de couleurs apparentes sur une ou plusieurs dents du patient et sur des échantillons-tests de couleurs, pour déterminer l'échantillon dont les couleurs apparentes se rapprochent le plus de celles des dents du patient.

4. Procédé selon l'une des revendications précédentes, caractérisé en ce que, pour définir la couleur de la prothèse, on privilégie la couleur apparente en éclairage naturel.

5. Procédé selon l'une des revendications précédentes, caractérisé en ce qu'on visualise sur un terminal graphique un ensemble représentant la prothèse et les dents adjacentes du patient avec leurs couleurs apparentes respectives.

6. Procédé selon l'une des revendications précédentes, caractérisé en ce que l'on détermine, de façon automatique à partir des composantes ou des coefficients trichromatiques de la couleur déterminée, le dosage des pigments à ajouter à une résine pour obtenir cette couleur

7. Dispositif de détermination de la couleur à donner en particulier à une prothèse dentaire, à partir de la couleur d'au moins une dent adjacente dans la bouche d'un patient, comprenant une source de lumière (36) d'un type quelconque et des fibres optiques (42, 46, 48, 32b) pour éclairer la dent, capter la lumière réfléchie par la dent et la transmettre, caractérisé en ce qu'il comprend un spectrocolorimètre (10, 12, 14) dont une voie d'entrée (28) à fibre optique est reliée auxdites fibres optiques (48, 32b) de captation et de transmission de la lumière, ce spectrocolorimètre comprenant des moyens (18, 22) de mesure et de détermination de la réflectance spectrale diffuse de la dent à partir d'une mesure unique de la lumière réfléchie par la dent, et des moyens (10) de calcul associés au spectrocolorimètre pour déterminer les colorations apparentes de la dent correspondant à des éclairages différents et définir sans risque de métamérisme la couleur à donner à la prothèse.

8. Dispositif selon la revendication 7, caractérisé en ce qu'il comprend un instrument (44) de prise d'informations in situ, comportant une fibre optique (46) associée à la source de lumière (36) pour l'éclairage de la dent, et une fibre optique (48) de captation et de transmission de la lumière réfléchie par la dent.

9. Dispositif selon la revendication 8, caractérisé en ce que ledit instrument (44) comprend des moyens optiques de focalisation permettant une mesure locale sur une partie de dent.

10. Dispositif selon la revendication 8 ou 9, caractérisé en ce que ledit instrument (44) comprend des moyens d'homogénéisation du signal reçu, tels par exemple qu'une microsphère intégrante associée à la fibre optique (48) de captation et de transmission de la lumière réfléchie par la dent.

11. Dispositif selon l'une des revendications 7 à 10, caractérisé en ce que le spectrocolorimètre est du type comprenant un spectromètre (14) à mosaïque d'éléments photodétecteurs (20), associé à un microprocesseur (10) et monté sur une carte optoélectronique (12) qui porte également au moins deux voies (28) de mesure à fibres optiques aboutissant à l'entrée (16) du spectromètre et munies d'obturateurs (34) assurant la commutation des voies de mesure, des moyens (24, 26) d'étalonnage des photodétecteurs (20) en longueurs d'ondes, et des circuits électroniques (22) de lecture des photodétecteurs.

12. Dispositif selon la revendication 11, caractérisé en ce que l'une des voies de mesure du spectromètre est associée à la source de lumière (36) et l'autre voie de mesure est reliée à l'instrument (44) de prise d'informations pour recevoir la lumière réfléchie par la dent éclairée.

13. Dispositif selon la revendication 11 ou 12, caractérisé en ce que le microprocesseur (10) est relié à un terminal graphique permettant de visualiser un ensemble comprenant la prothèse et les dents adjacentes avec leurs couleurs apparentes.

## Ansprüche

1. Verfahren zum Bestimmen der Farbe eines Gegenstandes, insbesondere einer Zahnprothese, ausgehend von der Farbe eines identischen Gegenstandes, wie eines benachbarten Zahnes (50) in dem Mund eines Patienten, wobei dieses Verfahren darin besteht, daß der Zahn (50) durch Licht irgendeiner Art beleuchtet wird und das von dem Zahn reflektierte Licht mittels einer oder mehrerer Lichtleitfasern (46, 48) gesammelt und übertragen wird, dadurch gekennzeichnet, daß dieses in folgendem besteht: Übertragen des von dem Zahn reflektierten Lichtes zu einem Spektro-Kolorimeter (10, 12, 14) und Bestimmen der diffusen Spektralreflexion D(2) des Zahnes, ausgehend von einer einzigen Messung an dem Zahn, sodann rechnerisches Bestimmen der erscheinenden Färbungen des Zahnes für verschiedene Beleuchtungen zum Definieren der Farbe, welche der Prothese gegeben werden soll, unter Vermeidung der Metamerie-Probleme.

2. Verfahren nach Anspruch 1, dadurch gekennzeichnet, daß eine Probenahme über Wellenlängen der diffusen Spektralreflexion D (λ) des Zahnes durchgeführt wird, der einer gegebenen Beleuchtungsart entsprechende Spektralkoeffizient S(λ) bestimmt wird und die trichromatischen Komponenten X, Y, Z der erscheinenden Farbe des Zahnes für diese Beleuchtung berechnet wird.

3. Verfahren nach Anspruch 1 oder 2, dadurch gekennzeichnet, daß Bestimmungen erscheinender Farben an einem oder mehreren Zähnen des Patienten und an Testproben von Farben durchgeführt werden, um die Probe zu bestimmen, deren erscheinende Farben am meisten jenen der Zähne des Patienten nahekommen.

4. Verfahren nach einem der vorgehenden Ansprüche, dadurch gekennzeichnet, daß die erscheinende Farbe in einer natürlichen Beleuchtung bevorzugt wird, um die Farbe der Prothese zu definieren.

5. Verfahren nach einem der vorgehenden Ansprüche, dadurch gekennzeichnet, daß ein Satz, welcher die Prothese und die benachbarten Zähne des Patienten repräsentiert, mit ihren entsprechenden erscheinenden Farben an einem Graphik-Terminal sichtbar gemacht wird.

6. Verfahren nach einem der vorgehenden Ansprüche, dadurch gekennzeichnet, daß auf automatische Weise ausgehend von den Komponenten oder den trichromatischen Koeffizienten der bestimmten Farbe die Zuteilung von Pigmenten bestimmt wird, die einem Harz zugefügt werden sollen, um diese Farbe zu erhalten.

7. Einrichtung zum Bestimmen der Farbe, die insbesondere einer Zahnprothese ausgehend von der Farbe zumindest eines benachbarten Zahnes in dem Mund eines Patienten gegeben werden soll, mit einer Lichtquelle (36) irgendeiner Art, und mit Lichtleitfasern (42, 46, 48, 32b) zum Beleuchten des Zahnes, zum Sammeln des von dem Zahn reflektierten Lichtes und zu seiner Übertragung, dadurch gekennzeichnet, daß sie ein Spektro-Kolorimeter (10, 12, 14) aufweist, bei dem ein Eintrittskanal (28) aus Lichtleitfaser mit den Lichtleitfasern (48, 32b) zum Sammeln und Übertragen des Lichtes verbunden ist, wobei dieses Spektro-Kolorimeter Mittel (18, 22) zum Messen und zum Bestimmen der diffusen Spektralreflexion des Zahnes, ausgehend von einer einzigen Messung des von dem Zahn reflektierten Lichtes und Mittel (10) zum Berechnen aufweist, die mit dem Spektro-Kolorimeter verbunden sind, um die erscheinenden Färbungen des Zahnes entsprechend verschiedener Beleuchtungen zu bestimmen und die Farbe, welche der Prothese gegeben werden soll, ohne eine Metamerie-Gefahr zu definieren.

8. Einrichtung nach Anspruch 7, dadurch gekennzeichnet, daß sie ein Instrument (44) zum Erfassen von Informationen an Ort und Stelle aufweist, das eine Lichtleitfaser (46), die mit der Lichtquelle (36) zum Beleuchten des Zahnes verbunden ist und eine Lichtleitfaser (48) zum Sammeln und Übertragen des von dem Zahn reflektierten Lichtes aufweist.

9. Einrichtung nach Anspruch 8, dadurch gekennzeichnet, daß das Instrument (44) optische Mittel zum Fokussieren aufweist, wodurch eine lokale Messung an einem Zahnteil ermöglicht ist.

10. Einrichtung nach Anspruch 8 oder 9, dadurch gekennzeichnet, daß das Instrument (44) Mittel zum Homogenisieren des empfangenen Signals, wie beispielsweise eine integrierende Mikrokugel aufweist, die mit der Lichtleitfaser (48) zum Sammeln und zum Übertragen des von dem Zahn reflektierten Lichtes verbunden ist.

11. Einrichtung nach einem der Ansprüche 7 bis 10, dadurch gekennzeichnet, daß des Spektro-Kolorimeter einer Art angehört, die aufweist : ein Spektrometer (14) mit einer Reihung von Photodetektorelementen (20), das mit einem Mikroprozessor (10) verbunden ist und auf einer optoelektronischen Karte (12) angebracht ist, die gleichermaßen zumindest zwei Meßkanäle (28) aus Lichtleitfasern, die in dem Eingang (16) des Spektrometers enden und mit Verschlüssen (34) versehen sind, welche für das Kommutieren der Meßkanäle sorgen, Eichungsmittel (24, 26) für die Photodetektoren (20) über Wellenlängen und elektronische Schaltungen (22) zum Lesen der Photodetektoren trägt.

12. Einrichtung nach Anspruch 11, dadurch gekennzeichnet, daß einer der Meßkanäle des Spektrometers mit der Lichtquelle (36) verbunden ist und der andere Meßkanal mit dem Instrument (44) zum Erfassen von Informationen verbunden ist, um das von dem beleuchteten Zahn reflektierte Licht zu empfangen.

13. Einrichtung nach Anspruch 11 oder 12, dadurch gekennzeichnet, daß der Mikroprozessor (10) mit einem Graphik-Terminal verbunden ist, das es ermöglicht, einen Satz sichtbar zu machen, welcher die Prothese und die benachbarten Zähne mit ihren erscheinenden Farben aufweist.

**Claims**

1. A method of determining the color of an object, in particular of a dental prosthesis, with reference to the color of an identical object such as an adjacent tooth (50) in the mouth of a patient, the method consisting in illuminating the tooth (50) with light of any type, and in using one or more optical fibers (46, 48) to pick up and transmit the light reflected by the tooth, the method being characterized in that it consists in transmitting the light reflected by the tooth to a spectrocolorimeter (10, 12, 14) and in using a single measurement of the tooth to determine the diffuse spectral reflectance $D(\lambda)$ of the tooth, and then in calculating the various apparent colorations of the tooth corresponding to different types of light in order to define the prosthesis color while avoiding problems of metamerism.

2. A method according to claim 1, characterized in that the diffuse spectral reflectance $D(\lambda)$ of the tooth is sampled at different wavelengths, the spectral coefficient $S(\lambda)$ corresponding to a given type of illumination is determined, and the tristimulus values X, Y, and Z of the apparent color of the tooth are calculated for the tooth under said illumination.

3. A method according to claim 1 or 2, characterized in that the apparent colors of one or more of the patient's teeth and of a plurality of color test samples are determined in order to determine which sample has apparent colors that are closest to the apparent colors of the patient's teeth.

4. A method according to any preceding claim, characterized in that when defining the color of the prosthesis, most weight is given to the apparent color of the prosthesis under natural light.

5. A method according to any preceding claim, characterized in that teeth representing the prosthesis and the adjacent teeth of the patient are displayed on a graphics terminal to show their respective apparent colors.

6. A method according to any preceding claim, characterized in that the quantities of pigments to be added to a resin in order to match a color are determined automatically on the basis of the tristimulus values or of the chromaticity co-ordinates of said color.

7. Apparatus for determining the color to be given, in particular, to a dental prosthesis with reference to the color of at least one adjacent tooth in the mouth of a patient, said apparatus comprising a source of light of any type (36) and optical fibers (42, 46, 48, 32b) for illuminating the tooth, for picking up the light reflected by the tooth, and for transmitting it, the apparatus being characterized in that it comprises a spectrocolorimeter (10, 12, 14) having an optical fiber input path (28) connected to said optical fibers (48, 32b) for picking up and transmitting the light, said spectrocolorimeter including means (18, 22) for measuring and determining the diffuse spectral reflectance of the tooth from a single measurement of the light reflected bay the tooth, and calculating means (10) associated with the spectrocolorimeter for determining the apparent colorations of the tooth corresponding to different types of illumination and for defining the color to be given to the prosthesis without risk of metamerism.

8. Apparatus according to claim 7, characterized in that it comprises an instrument (44) for picking up information in situ, including an optical fiber (46) associated with a light source (36) for illuminating the tooth, and an optical fiber (48) for picking up and for transmitting the light reflected by the tooth.

9. Apparatus according to claim 8, characterized in that said instrument (44) includes optical focusing means making it possible to take localized measurements on a portion of a tooth.

10. Apparatus according to claim 8 or 9, characterized in that said instrument (44) includes means for homogenizing the received signal, e.g. such as an integrating microsphere associated with the optical fiber (48) for picking up and for transmitting the light reflected by the tooth.

11. Apparatus according to any one of claims 7 to 10, characterized in that the spectrocolorimeter is of the type comprising a spectrometer (14) having a mosaic of photodetector elements (20) associated with a microprocessor (10) and mounted on an optoelectronic card (12) which also mounts at least two optical fiber measurement paths (28) leading to the inlet (16) of the spectrometer and provided with shutters (34) for switching the measurement paths, means (24, 26) for wavelength calibrating the photodetectors (20), and electronic circuits (22) for reading the photodetectors.

12. Apparatus according to claim 11, characterized in that one of the spectrometer measurement paths is associated with the light source (36) and the other measurement path is connected to the instrument (44) for picking up color information for receiving light reflected by the illuminated tooth.

13. Apparatus according to claim 11 or 12, characterized in that the microprocessor (10) is connected to a graphics display terminal for displaying the prosthesis together with the adjacent teeth in their apparent colors.

## FIG. 1

## FIG. 2